# EUROPEAN PATENT SPECIFICATION

(11) **EP 1 300 305 B1**
(45) Date of publication and mention of the grant of the patent: **21.06.2006**
(21) Application number: 02020701.5
(22) Date of filing: 14.09.2002
(51) Int. Cl.: B60T 3/00

(54) **Wedge chock block for industrial vehicles**
Radkeil für Industriefahrzeuge
Cale pour véhicules industriels

(30) Priority: 28.09.2001 IT MI20010534 U
(43) Date of publication of application: 09.04.2003
(73) Proprietor: RECO s.r.l., 23870 Cernusco L. (Lecco) (IT)
(72) Inventor: Ghezzi, Dario, 23870 Cernusco L. (LC) (IT); Redaelli, Guido, 23870 Cernusco L. (LC) (IT)
(74) Representative: Ferraiolo, Ruggero

(56) References cited:
- EP-A- 0 622 281
- EP-A- 0 736 427
- GB-A- 1 311 411

## Description

The present invention concerns a wedge chock block for industrial vehicles. Such wedge may be placed on the ground in such a way as to press against the anterior or posterior part of a wheel of the vehicle while it is standing still in order to prevent any undesired movements.

These wedges were formerly made of various materials, including wood and metals, but those made of wood were not sufficiently reliable as regards integrity and duration and those made of metal can give rise to fire when they rub against the road surface, so that present-day safety regulations suggest that chock blocks should be made of plastic materials and that the use of metals should be confined to possible inserts intended to improve the hold on the ground.

Known to the state of the art are chock blocks for vehicles that employ various solutions to assure transfer to the ground of the thrust exerted by the wheel and at the same time keep the chock block well attached to the ground; the known solutions include utility model application T095U000086, also published as EP 0 736 427 A1, in which the chock block is made of moulded plastic material and the base in contact with the ground incorporates a metallic insert that projects in a position near the rear face of the wedge and consists of a metal piece arranged at an angle and having two wings, both of which bear against the body of the chock block, with a substantially T-shaped transverse section of which the wings are parallel to the rear face of the wedge and one of which is accommodated on a seating on the inside of the wedge body. Furthermore, the body of the chock block is made up of longitudinal partitions arranged at a certain distance from each other that connect the base and the rear wall of the wedge and transverse diaphragms that connect the base with the side walls of the wedge, where the transverse diaphragms extend also beyond the base to form anti-slip teeth.

The drawback associated with this and other chock blocks is that they are very heavy and, consequently, not easy to handle.

The chock block in accordance with the present invention comprises, all in moulded plastic material, a rear face conventionally inclined with respect to the horizontal base structure that bears against the ground and is characterized by a plurality of struts made of moulded plastic material that depart from said horizontal base structure and with their upper ends form the surface against which the wheel comes to bear, while their lower ends form the aforesaid structure bearing against the ground and each

of these struts has substantially the form of a hollow or solid cylinder and is connected to the adjacent struts by means of linkage ribbing extending over the entire length of the strut.

For reasons connected with the moulding, the hollow cylinder will really be a hollow truncated cone of which the smaller section will be the one that constitutes the surface bearing against the wheel.

Two rows of struts parallel with each other and arranged along the two longitudinal sides of the chock block form the two side faces of the chock block.

The plurality of struts can either completely fill the perimeter of the chock block or can be organized in such a way that the rows of struts are kept at a convenient distance apart in both the longitudinal and the transverse direction of the chock block.

From the bottom face of the structure bearing against the ground and in a position adjacent to the rear face there extends a plurality of gripping elements to assure the chock block's hold on the ground. This plurality of gripping elements may be made of aluminium alloy or high-strength plastic material.

As an alternative to the aforesaid plurality of gripping elements, the bottom ends of the ribbing that links the struts to each other may be provided with individual gripping heads made of aluminium alloy or other soft metals and shaped in the manner of a rounded or pointed nail head.

The rear face of the chock block carries on its outside a series of ribbings parallel to the struts in order to contribute to resisting the thrust applied by the wheel under which the chock block is inserted.

The tip of the chock block is a prolonged extension of the wedge shape of the chock block to enable the wheel to make contact with a maximum bearing surface of the chock block.

The principal advantages of this chock block consist of its smaller weight as compared with its known counterparts, the efficacy of its hold on the ground and the fact that it avoids the corrosion and sparking caused by steel parts, which do not exist in this chock block.

The chock block will now be illustrated in greater detail by the description of a particular embodiment and reference to the drawings, of which:
Figure 1 shows a first side elevation,
Figure 2 shows a first view from above,
Figure 3 shows a first view from below,
Figure 4, shows a first perspective view from above,
Figure 5 shows a first perspective view from below,
Figure 6 shows a second side elevation,
Figure 7 shows a second perspective view from above,
Figure 8 shows a second perspective view from below,
Figure 9 shows a second perspective view from above,
Figure 10 shows a second perspective view from below, and
Figure 11 shows a third side elevation.

Hereinafter the same reference numbers will always be used to indicate parts that appear in all or several of the figures. The reference number 1 indicates the chock block as a whole; 2 the rear face; 3 the horizontal structure bearing on the ground; 4 each of the struts; 40 the bearing surface for a wheel defined by the set of upper ends of the struts 4; 5 the linkage ribbing between adjacent struts; 6 an element for gripping the ground with its elements projecting from said horizontal structure, 7 is the tip of the chock block and carries on its bottom face a series of undulations 7a to create friction between it and the ground; 8 are the ribbings provided on the external face of the rear wall in parallel with the struts; and 9 is a large handle provided on the rear face of the chock block to permit its being readily handled. With the sole exception of element 6d made of aluminium alloy, all the parts that have just been listed are made of moulded plastic material.

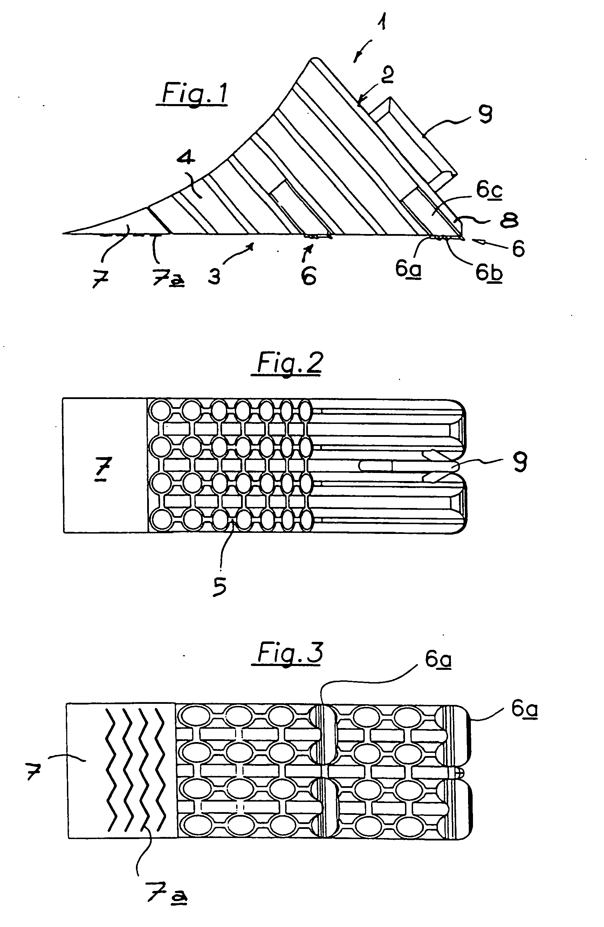

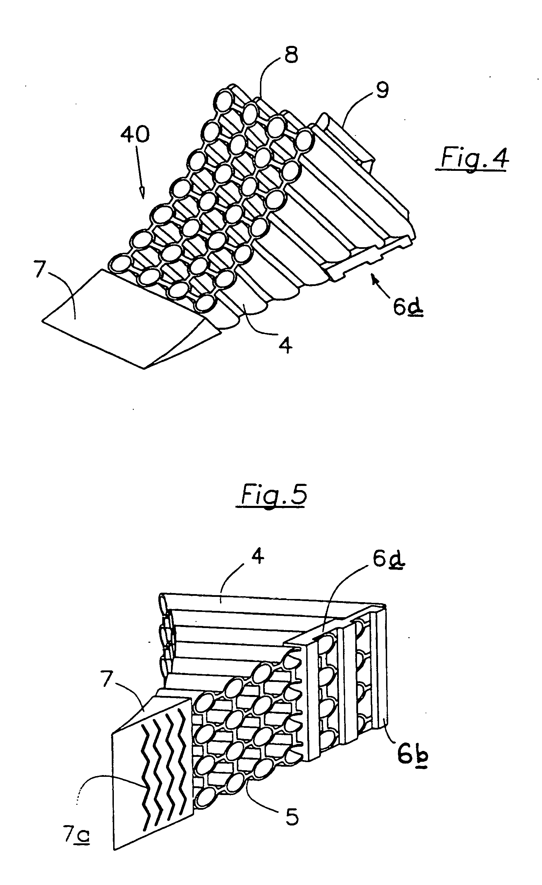

The group of figures 1-5 all illustrate the same chock block 1 consisting of twenty-eight struts 4, each of the form of a hollow cylinder, arranged in longitudinal and transverse rows, the struts, which have a length that decreases from the rear face to the tip of the wedge, being inclined in such a way as to form a bearing surface 40 for the wheel of a truck. Figures 1 and 3 show four pairs of gripping elements 6, each having the form of a platelet 6a that on its underside is provided with gripping teeth 6b and on its upper face carries a cylindrical projection 6c that is forced into the hollow of the strut to assure that the gripping elements will remain solidly attached to the chock block; two gripping elements are applied to the struts adjacent to the rear face 2 and two are applied to the struts of an intermediate row. Figures 4 and 5 show that the gripping elements are realized by means of a single aluminium alloy element 6d integral with the chock block in the part adjacent to its rear face and carrying three teeth 6b spaced an appropriate distance apart and projecting in a transverse direction with respect to the block.

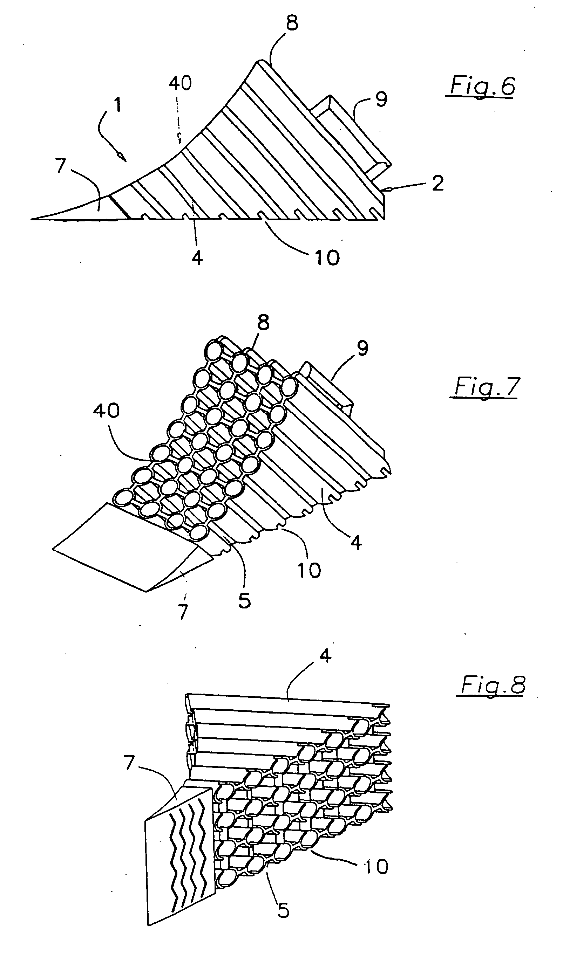

The group of figures 6-8 shows a chock block 1 in which the gripping means assuring the block's hold of the ground are obtained by means of cut-outs 10 made in the bottom parts of the struts, again in the transverse direction with respect to the block.

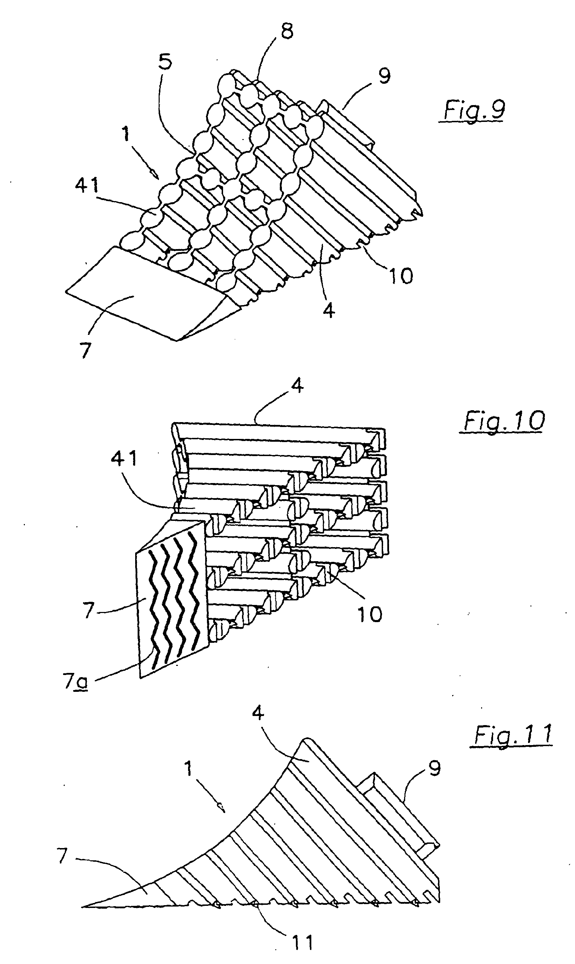

Figures 9 and 10 show a chock block 1 comprising struts 41 in the form of solid cylinders arranged in two longitudinal rows at the side of the block, an intermediate longitudinal row and an intermediate transverse row, adjacent struts being linked by means of ribbing 5, while cut-outs 10 made at the bottom end of each strut act as gripping means assuring hold of the ground.

Figure 11 shows that the gripping means assuring hold of the ground consist of a plurality of aluminium nails 11 incorporated in the plastic material during the moulding process in such a way that their heads, which may be pointed or rounded, project from the structure bearing against the ground.

## Claims

1. A wedge chock block for industrial vehicles (1) made of moulded plastic material and comprising gripping elements on the lower surface and a rear face conventionally inclined with respect to the surface bearing against the ground when in use **characterized by** a plurality of struts (4, 41) that depart from said surface and with their upper ends constitute the surface (40) that bears against the vehicle wheel when in use, each strut (4) having substantially the form of a hollow or solid cylinder and being joined to the adjacent ones by means of linkage ribbing (5) extending along its entire length.

2. A wedge chock block in accordance with claim 1 **characterized in that** the hollow cylinders are in the form of truncated cones wherein the smaller section is the one that constitutes the surface bearing against the wheel.

3. A wedge chock block in accordance with claims 1, 2 **characterized in that** two rows of struts parallel with each other and at the two longitudinal sides of the chock block constitute the two side faces of the chock block.

4. A wedge chock block in accordance with claims 1-3 **characterized in that** the struts (40, 41) are arranged in longitudinal and transverse rows to occupy substantially the entire perimeter of the chock block.

5. A wedge chock block in accordance with claims 1-3 **characterized in that** the plurality of struts (40, 41) is organized into rows reciprocally distanced in both the longitudinal and the transverse direction.

6. A wedge chock block in accordance with claims 1 to 5, **characterized in that** it comprises pairs of gripping elements (6), each having the form of a platelet provided on its underside with teeth (6a, 6b) and on its upper side with cylindrical projections (6c) to be forced, respectively, into the hollow of a strut, at least two pairs being applied to the struts adjacent to the rear and other pairs being applied to the struts of intermediate rows.

7. A wedge chock block in accordance with claims 1 to 6, **characterized in that** the lower ends of the struts are provided with transverse cut-outs (10) as gripping elements assuring hold of the ground.

8. A wedge chock block in accordance with claims 1 to 7, **characterized in that** the lower ends of the linkage ribbing between the struts are provided with single nail-like gripping elements (11) made of aluminium alloy or other soft metals to assure hold of the ground.

9. A wedge chock block in accordance with claims 1 to 8, **characterized in that** the rear face of the chock block carries on its outside a series of ribbings (8) parallel to the struts.

10. A wedge chock block in accordance with claims 1 to 9 **characterized in that** it comprises a tip as an extension (7) provided with projections (7a) on its underside to assure hold of the ground.

## Patentansprüche

1. Radkeil (1) für Industriefahrzeuge, der aus spritzgegossenem Kunststoffmaterial besteht und Greifelemente an der unteren Fläche sowie eine Rückfläche aufweist, die in bekannter Weise relativ zu der bei Benutzung auf dem Boden aufsitzenden Fläche geneigt ist, ***gekennzeichnet durch*** eine Mehrzahl von Streben (4, 41), die von der genannten Fläche ausgehen und mit ihren oberen Enden die Fläche (40) bilden, die bei Gebrauch gegen das Fahrzeugrad anliegt, wobei jede Strebe (4) im Wesentlichen die Form eines hohlen oder massiven Zylinders hat und mit den benachbarten Streben **durch** Verbindungsstege (5), die sich über ihre gesamte Länge erstrecken, verbunden ist.

2. Radkeil nach Anspruch 1, ***dadurch gekennzeichnet,* dass** die Hohlzylinder die Form von Kegelstümpfen haben, deren kleinerer Querschnitt derjenige ist, der die gegen das Rad anliegende Fläche bildet.

3. Radkeil nach Anspruch 1, 2, ***dadurch gekennzeichnet,* dass** zwei Reihen von Streben, die parallel zueinander sind und sich an den beiden Längsseiten des Radkeils befmden, die beiden Seitenflächen des Radkeils bilden.

4. Radkeil nach Anspruch 1 bis 3, ***dadurch gekennzeichnet,* dass** die Streben (40, 41) in Längs- und Querreihen derart angeordnet sind, dass sie im Wesentlichen den gesamten Umfang des Radkeils einnehmen.

5. Radkeil nach Anspruch 1 bis 3, ***dadurch gekennzeichnet,* dass** die Mehrzahl von Streben (40, 41) in Reihen angeordnet sind, die in Längs- und Querrichtung voneinander beabstandet sind.

6. Radkeil nach Anspruch 1 bis 5, ***dadurch gekennzeichnet,* dass** er Paare von Greifelementen (6) aufweist, von denen jedes die Form eines Plättchens hat, das an seiner Unterseite mit Zähnen (6a, 6b) und an seiner Oberseite mit zylindrischen Vorsprüngen (6c) versehen ist, die in den Hohlraum einer Strebe einpressbar sind, wobei mindestens zwei Paare an den der Rückseite benachbarten Streben angebracht sind und andere Paare an den Streben der Zwischenreihen angebracht sind.

7. Radkeil nach Anspruch 1 bis 6, ***dadurch gekennzeichnet,* dass** die unteren Enden der Streben mit querverlaufenden Ausschnitten (10) als Greifelemente, die den Halt auf den Boden gewährleisten, versehen sind.

8. Radkeil nach Anspruch 1 bis 7, ***dadurch gekennzeichnet,* dass** die unteren Enden der Verbindungsstege zwischen den Streben mit einzelnen nagelförmigen Greifelementen (11) aus Aluminiumlegierung oder anderem weichen Metall versehen sind, um den Halt am Boden zu gewährleisten.

9. Radkeil nach Anspruch 1 bis 8, ***dadurch gekennzeichnet,* dass** die Rückseite des Radkeils an ihrer Außenseite eine Reihe von Rippen (8) parallel zu den Streben trägt.

10. Radkeil nach Anspruch 1 bis 9, ***dadurch gekennzeichnet,* dass** er eine Spitze als eine Verlängerung (7) aufweist, die mit Vorsprüngen (7a) an ihrer Unterseite versehen ist, um den Halt auf dem Boden zu gewährleisten.

## Revendications

1. Une cale (1) pour véhicules industriels, réalisée en matière synthétique moulée et comprenant des éléments de saisie, sur la surface inférieure, et une face arrière, classiquement inclinée par rapport à la surface portant contre le sol, une fois en utilisation, **caractérisée par** une pluralité d'étais (4, 41), partant de ladite surface et, qui avec leurs extrémités supérieures, constituent la surface (40) qui porte contre la roue de véhicule une fois en utilisation, chaque étai (4) ayant sensiblement la forme d'un cylindre creux ou massif et étant joint aux étais adjacents au moyen d'un nervurage de liaison (5) s'étendant sur la totalité de sa longueur.

2. Une cale selon la revendication 1, **caractérisée en ce que** les cylindres creux se présentent sous la forme de cônes tronqués, dans laquelle la plus petite section de l'un constitue la surface portant contre la roue.

3. Une cale selon les revendications 1, 2, **caractérisée en ce que** deux rangées d'étais, parallèles à chaque autre et situées sur les deux côtés longitudinaux de la cale, constituent les deux faces latérales de la cale.

4. Une cale selon les revendications 1 à 3, **caractérisée en ce que** les étais (40, 41) sont agencés en rangées longitudinales et transversales, pour occuper pratiquement la totalité du périmètre de la cale.

5. Une cale selon les revendications 1 à 3, **caractérisée en ce que** la pluralité d'étais (40, 41) est organisée en rangées, espacées alternativement à la fois en direction longitudinale et en direction transversale.

6. Une cale selon les revendications 1 à 5, **caractérisée en ce qu'**elle comprend des paires d'éléments de saisie (6), chacun ayant la forme d'une plaquette munie, sur sa face inférieure, de dents (6a, 6b) et, sur sa face supérieure, de saillies cylindriques (6c) devant être forcées, respectivement, dans le creux d'un étai, au moins deux paires étant appliquées sur les étais adjacents à l'arrière, et les autres paires étant appliquées sur les étais des rangées intermédiaires.

7. Une cale selon les revendications 1 à 6, **caractérisée en ce que** les extrémités inférieures des étais sont munies de découpures transversales (10), faisant office d'éléments de saisie assurant le maintien au sol.

8. Une cale selon les revendications 1 à 7, **caractérisée en ce que** les extrémités inférieures du nervurage de liaison entre les étais sont munies d'éléments de saisie (11) analogues à des clous, uniques, réalisés en alliage d'aluminium ou en d'autres métaux mous, pour assurer le maintien au sol.

9. Une cale selon les revendications 1 à 8, **caractérisée en ce que** la face arrière de la cale porte, sur sa face extérieure, une série de nervurages (8) parallèles aux étais.

10. Une cale selon les revendications 1 à 9, **caractérisée en ce qu'**elle comprend un bout, réalisé sous forme d'une extension (7), munie sur sa face inférieure de saillies (7a) pour assurer le maintien au sol.
